# EUROPEAN PATENT SPECIFICATION

(11) **EP 1 079 504 B1**
(45) Date of publication and mention of the grant of the patent: **31.10.2007**
(21) Application number: 00118529.7
(22) Date of filing: 25.08.2000
(51) Int. Cl.: H02K 15/10, H02K 15/12

(54) **Method of impregnating coil with resin, having separate processes of incorporating particles and impregnating coil**
Verfahren zur Imprägnierung einer Wicklung mit Harz mit zwei getrennten Verfahrensschritten zum Einarbeiten von Partikeln und zur Imprägnierung
Procédé d'imprégnation d'une bobine comportant deux étapes séparées d'incorporation de particules et d'imprégnation

(30) Priority: 26.08.1999 JP 24058799
(43) Date of publication of application: 28.02.2001
(73) Proprietor: HONDA GIKEN KOGYO KABUSHIKI KAISHA, Minato-ku, Tokyo (JP)
(72) Inventor: Ozawa, Masaru, 4-1 Chuo 1-chome, Wako-shi, Saitama-ken (JP); Endo, Masaaki, 4-1 Chuo 1-chome, Wako-shi, Saitama-ken (JP); Fukuda, Takeo, 4-1 Chuo 1-chome, Wako-shi, Saitama-ken (JP)
(74) Representative: Prechtel, Jörg

(56) References cited:
- WO-A-99/33156
- GB-A- 697 275
- JP-A- 6 197 502
- PATENT ABSTRACTS OF JAPAN vol. 1999, no. 10, 31 August 1999 (1999-08-31) -& JP 11 136911 A (SHINKO ELECTRIC CO LTD), 21 May 1999 (1999-05-21)
- PATENT ABSTRACTS OF JAPAN vol. 015, no. 299 (E-1095), 30 July 1991 (1991-07-30) -& JP 03 107354 A (YASKAWA ELECTRIC MFG CO LTD), 7 May 1991 (1991-05-07)
- DATABASE WPI Section EI, Week 199404, 1994 Derwent Publications Ltd., London, GB; Class V06, AN 1994-035334 XP002183366 -& WO 94 01916 A (FANUC LTD), 20 January 1994 (1994-01-20)
- PATENT ABSTRACTS OF JAPAN vol. 1996, no. 09, 30 September 1996 (1996-09-30) -& JP 08 140294 A (NIPPON ELECTRIC IND CO LTD), 31 May 1996 (1996-05-31)

## Description

The present invention relates to a method of manufacturing a rotating electric machine having a stator winding, and a method of impregnating a coil with a resin. In particular, the present invention relates to a technique for easily and reliably impregnating a coil with heat-conductive particles, and for improving the cooling efficiency.

This application is based on Patent Application No. Hei 11-240587 in Japan, the contents of which are incorporated herein by reference.

PATENT ABSTRACTS OF JAPAN vol. 1999, no. 10, 31 August 1999 (1999-08-31)-&JP 11 136911 A (SHINKO ELECTRIC CO LTD), 21 May 1999 (1999-05-21) discloses a method of manufacturing a rotating electric machine comprising the steps of:
- impregnating a coil in a volatile alcohol solution which includes a filler,
- drying the coil,
- impregnating and coating the dried coil with a thermosetting resin and heat-curing the resin, so as to form a stator winding using the coil.

There, the volatile solution is poured into a shell, in which an electromagnetic coil to be molded is placed, and the shell is heated to 80°C so as to evaporate the volatile solution, which requires a heating system.

PATENT ABSTRACTS OF JAPAN vol. 015, no. 299 (E-1095), 30 July 1991 (1991-07-30)-& JP 03 107354 A (YASKAWA ELECTRIC MFG CO LTD), 7 May 1991 (1991-05-07) discloses to perform such an impregnation by soaking the coil into a solution and then puling it out. The preamble of claim 1 is based on this document.

WO 99 33156 A (MINNESOTA MINING & MFG) 1 July 1999 (1999-07-01)) discloses to use boron nitride or aluminum oxide in rotating electric machines for promoting heat dissipation.

JP 6-197502 A discloses a method suitable for impregnating a coil of a rotation electric machine with a resin, this method including the following steps: - soaking a coil into a volatile, alcohol solution (methanol = methyl alcohol) including mica particles which are heat conductive particles, since mica is a relatively good heat conducting material, at least better than other known material like epoxy,
- pulling the coil out of the solution,
- drying the coil and
- impregnating the dried coil with a thermosetting resin and heat-curing the resin so as to form a stator winding using the coil.

GB 697275 A discloses soaking an object in a volatile solvent and then removing the object so as to dry the object.

A high-speed rotating electric machine is known, which includes a rotor provided inside (the inner-peripheral side of) a stator winding, and the rotor is driven at a high rotation speed (approximately, 100,000 rpm). In order to output higher power from such a high-speed rotating electric machine, it is important to (i) reduce iron loss (or core loss) of the iron core of the stator, (ii) efficiently reduce the generation of heat and remove the heat due to copper loss or eddy-current loss of the stator winding.

Therefore, the stator winding is formed by impregnating the winding with a resin such as varnish so as to incorporate BN (boron nitride) particles or the like into the winding, and then heat-curing (or hardening) the resin.

Here, the BN or Al₂O₃ particles have a high heat conductivity and a high electric insulating ability.

The BN or Al₂O₃ particles may be included in advance in a liquid resin. However, the resin such as varnish originally has a high viscosity, and in the above case, the flowability or fluidity at the impregnation is reduced. In particular, in this case, it is difficult to impregnate a stator winding closely wound with a resin including BN or Al₂O₃ particles.

In order to solve the above problem, Japanese Unexamined Patent Application, First Publication, Hei 9-215282 discloses a method in which a tubular winding is made by winding a wire in several turns with sprinkling particles onto the wire, and then the coil is impregnated with a suitable resin.

However, in this method, the process of forming the coil is complicated because the particles are sprinkled during the winding of a wire.

### SUMMARY OF THE INVENTION

In consideration of the above circumstances, it is an object of the present invention to provide a method for easily and reliably impregnating a stator winding (i.e., coil) with heat-conductive particles, wherein the heat-conductive particles are incorporated deeply inside the coil, that is, in gaps between the coil wires of which the coil consists.

Therefore, the present invention provides a method of impregnating a coil with a resin, comprising the steps of:
inserting a coil into an iron core;
impregnating the coil with a thermosetting resin;
inserting a mandrel made of thermically expanding material into the impregnated coil;
heat-curing the resin while the coil is pushed onto the core by thermically expanding the mandrel, and
pulling out the mandrel out of the coil,
characterized by, before the step of inserting the coil into the iron core is carried out, soaking the coil into a volatile solution which includes boron nitride particles or Al₂O₃ particles; and pulling the coil out of the solution and drying the coil.

In the method, preferably, an alcohol solution using ethyl alcohol or the like is used as the volatile solution. In order to impregnate the coil with the resin, the coil may be coated with the resin, or the resin may be injected into the coil, or the coil may be soaked in a liquid resin.

In the present invention, the procedure for impregnating a coil with a thermosetting resin (so as to incorporate boron nitride or Al₂O₃ particles as heat-conductive particles) and heat-curing the resin is divided into a process of incorporating the heat-conductive boron nitride or Al₂O₃ particles into the coil, and a process of soaking the coil (obtained in the above process) in the resin and heat-curing the resin.
Accordingly, while the coil is soaked in the volatile solution, the boron nitride or Al₂O₃ particles are fully incorporated into the inside of the coil. When the coil is then dried, only the volatile solution is evaporated, thereby easily obtaining a coil in which the boron nitride or Al₂O₃ particles are present from the surface to the inside thereof.

Therefore, when the above coil including the boron nitride or Al₂O₃ particles is impregnated with a thermosetting resin such as varnish, the boron nitride or Al₂O₃ particles in the vicinity of the surface of the coil disperse in the resin, so that the coil is impregnated with varnish which includes the boron nitride or Al₂O₃ particles and thus has a higher heat conductivity. Accordingly, the stator winding formed by heat-curing this coil has a very high cooling efficiency.

Consequently, a rotating electric machine comprising a stator winding (using the coil made by the above method) can have a very high cooling efficiency of the stator winding. Therefore, even when the rotor is driven with a very high speed inside the stator winding, the heat due to heat loss can be effectively removed, thereby realizing a higher load and higher power output.

### BRIEF DESCRIPTION OF THE DRAWINGS

Fig. 1 is a cross-sectional view in the longitudinal direction, showing an embodiment of the rotational electric machine to which the present invention is applied.
Fig. 2 is a view for explaining the method of impregnating a coil of the present invention, which shows the process of soaking the coil in an alcohol solution including BN particles.
Fig. 3 is an enlarged view of a portion of the coil after the drying process.
Fig. 4 is a view showing the process of inserting the coil into the stator iron core.
Fig. 5 is a view showing the process of soaking the integrated body of the stator iron core and the coil in a varnish vessel.
Fig. 6 is a view showing the process of inserting a mandrel into the coil which is inserted in the stator iron core.
Fig. 7 is a view showing the process of heat-curing the varnish of the integrated body of the stator iron core, the coil, and the mandrel.
Fig. 8 is a view showing the process of pulling out the mandrel after the varnish is cured.
Fig. 9 shows a belt-like wire body consisting of a plurality of coil segments.
Fig. 10 is a perspective view showing the stator winding formed by rolling up the belt-like wire body.

### DESCRIPTION OF THE PREFERRED EMBODIMENTS

Hereinafter, an embodiment according to the present invention will be explained with reference to the drawings.

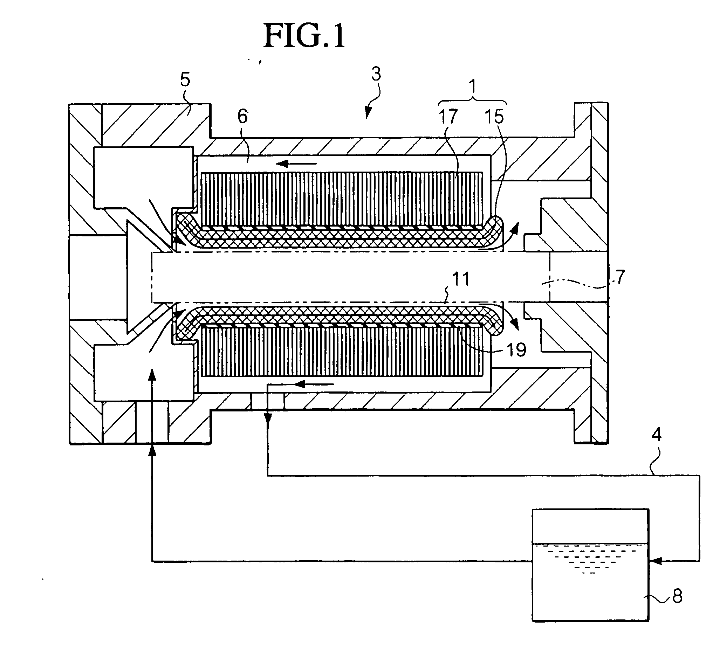

Fig. 1 shows a rotating electric machine (such as a motor) 3 having a slot-less stator 1. The power of the rotating electric machine 3 is, for example, a few kW to a few tens of kW, and is suitably applied to a high-speed rotating electric machine driven at a few tens of thousands rpm or more.

The outside wall of the rotating electric machine 3 is formed by casing 5, and rotor 7 is provided in a freely rotatable form via a bearing (not shown) along the center axis of casing 5.

In casing 5, an oil path 6 is formed, which functions as a portion of a hydraulic circuit 4.

In the above structure, lubricating oil is supplied to the oil path 6 from an oil source 8, and the lubrication of the bearing and the cooling of the slot-less stator 1 are simultaneously performed using the lubricating oil. The order of cooling of the slot-less stator 1 is from the inner-peripheral side to the outer-peripheral side, as indicated by the arrows in Fig. 1.

The rotor 7 includes a permanent magnet for generating a magnetic field. This permanent magnet has p magnetic poles (p is an even number of two or more) for generating a magnetic flux from the surface of the rotor in the radial direction of the rotor. A rare earth magnet such as an Sm-Co or Nd-Fe-B sintered magnet is preferable as the above permanent magnet.

The slot-less stator 1 is arranged around the rotor 1 via gap 11 and inner tube (not shown). This inner tube is provided for blocking the lubricating oil flowing through the inner-peripheral side of the slot-less stator 1 (see arrows in Fig. 1). The inner tube is made of, for example, zirconia ceramics. Other kinds of ceramic such as alumina ceramics may be used.

The slot-less stator 1 has no slot for fixing stator winding (i.e., coil) 15, and comprises stator winding 15 positioned at the rotor 7 side, and stator iron core 17 positioned at the casing 5 side.

The stator iron core 17 has a hollow-cylindrical shape, and the outer-peripheral surface thereof contacts the inner-peripheral surface of casing 5. The stator iron core 17 is made by stacking ring-shaped electromagnetic steel plates (in the thickness direction of the plates); however, a divided form may be employed. In addition, the stator iron core 17 has a cylindrical inner-peripheral face having no slot.

The stator winding 15 has a hollow-cylindrical shape as the shape of the stator iron core 17, and is attached using a resin such as varnish, in a manner such that the outer-peripheral face of the stator winding 15 faces the inner-peripheral face of the stator iron core 17 via insulating layer 19.

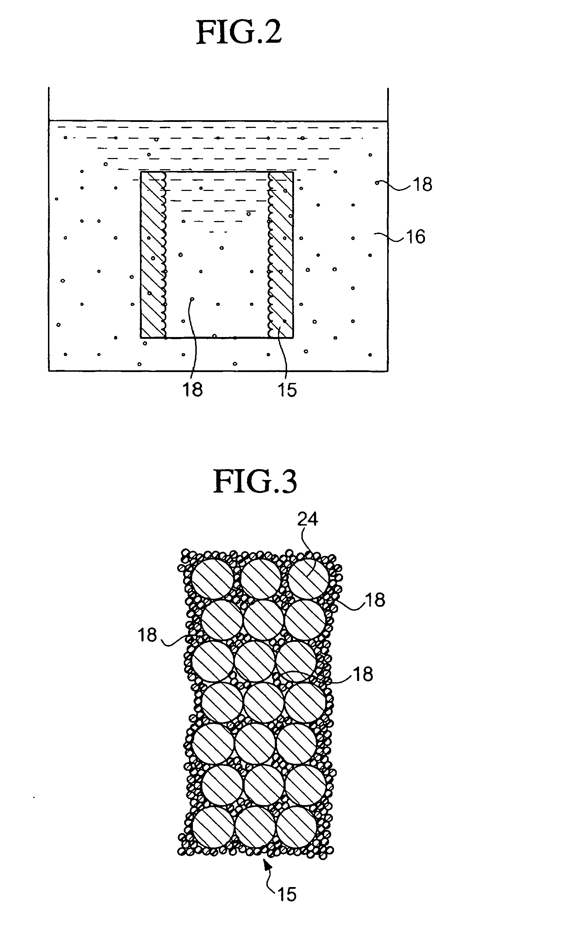

Below, an embodiment of the method of impregnating a coil with a resin according to the present invention will be explained with reference to Figs. 2 to 10. This method is performed in the procedure of manufacturing a stator winding relating to the present invention.

First, stator winding (i.e., coil) 15 having a hollow-cylindrical shape is formed by using coil segments 23a, 23b, and 23c combined each other, each having a rhomboid-like shape.

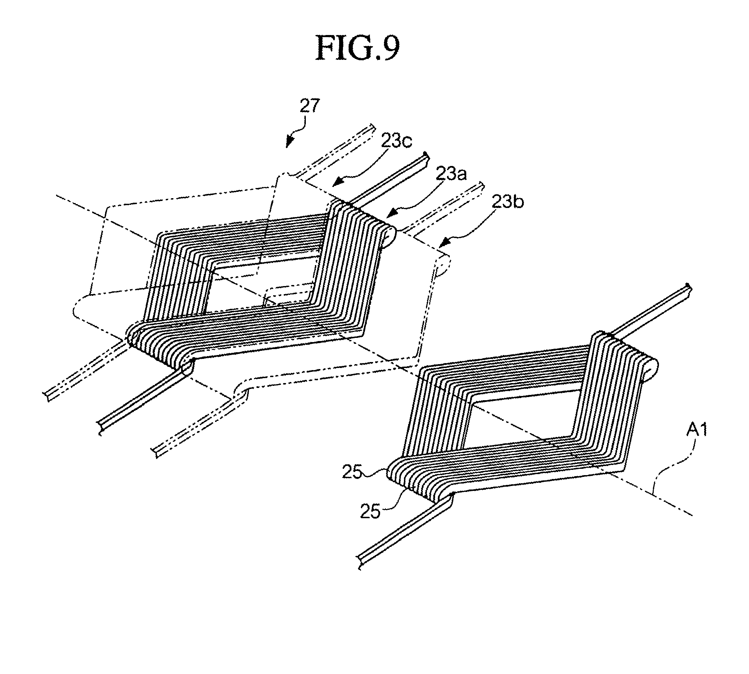

Each coil segment is made by winding a wire bundle 25 consisting of coil wires (i.e., conductors) 24 so as to make a rhomboid-like shape. That is, the wire bundle 25 is wound in several turns, where the lines corresponding to two successive turns are arranged side by side by shifting the winding position in diagonal direction A1 of the "rhomboid" for each turn (see Fig. 9).

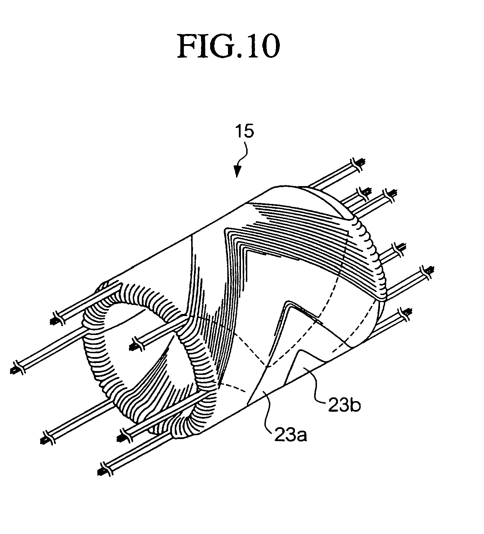

After forming belt-like wire body 27 by combining the coil segments 23a, 23b, and 23c by shifting each segment in the diagonal direction A1 in turn, the belt-like wire body 27 is rolled up to form a hollow-cylindrical shape, so that hollow-cylindrical stator winding 15 is formed (see Fig. 10).

This stator winding 15 is soaked in an alcohol solution (i.e., volatile solution) 16 including BN particles 18 (see Fig. 2). In this way, the BN particles 18 dispersed in the alcohol solution 16 get into gaps between coil wires 24. Accordingly, the BN particles are incorporated in a large volume from the surface to the inside of the stator winding 15.

In the next step, the stator winding 15 is pulled out of the alcohol solution 16, and is naturally air-dried so as to evaporate the volatile alcohol. Accordingly, stator winding 15 in which BN particles 18 are incorporated from the outer-surface side to the inner side (that is, the surface and gaps between coil wires are filled with the BN particles) can be obtained (see Fig. 3).

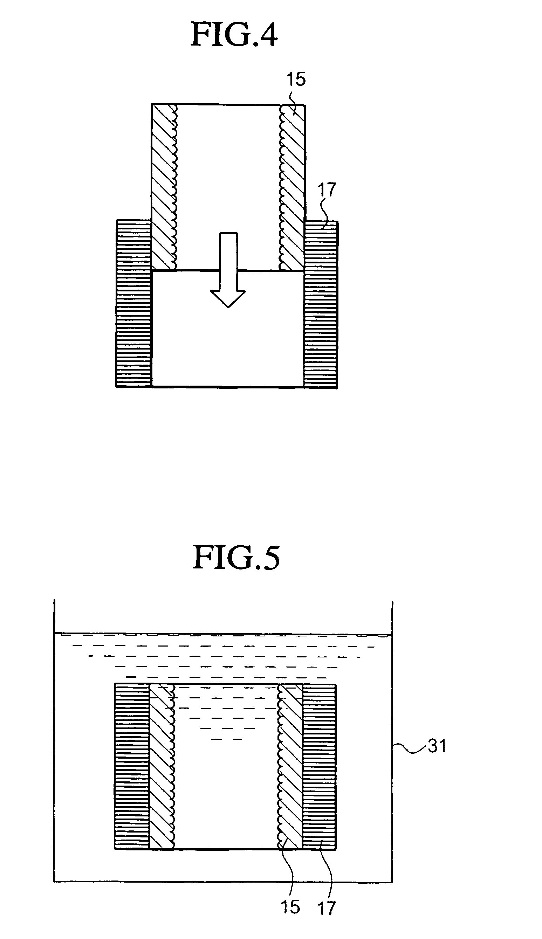

In the following step, a silicone sheet for forming the insulating layer 19 (not shown in Fig. 4) is wound up around the outer-peripheral side of the stator winding 15, and this stator winding 15 is then inserted into stator winding iron core 17.

After that, this integrated body consisting of stator winding iron core 17 and stator winding 15 is soaked in varnish impregnation vessel 31 (see Fig. 5), and this vessel is then disposed in a vacuum chamber (not shown) so as to perform vacuum impregnation.

While the stator winding 15 is impregnated with varnish, the BN particles 18 present in the vicinity of the surface of the stator winding 15 disperse in the varnish; thus, the stator winding 15 is impregnated with varnish including BN particles 18.

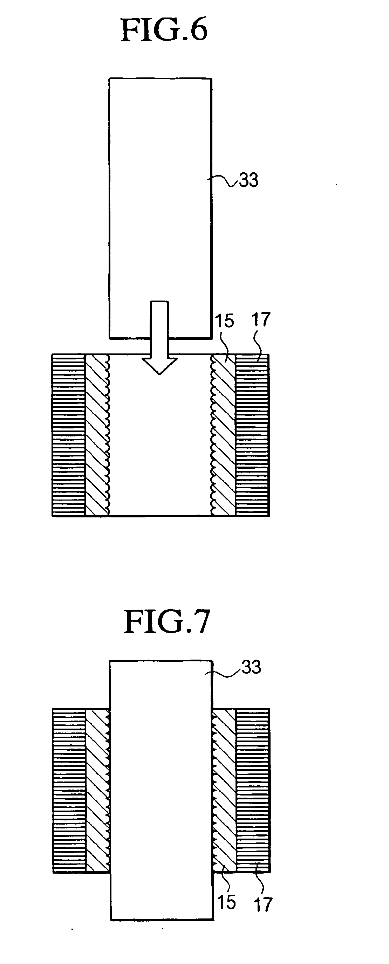

In the next step, the integrated body of stator winding iron core 17 and stator winding 15 is pulled out of the varnish impregnation vessel 31. After that, mandrel 33 made of fluororesin is inserted into the inner-peripheral side of the stator winding 15 (see Fig. 6). The integrated body consisting of stator winding iron core 17, stator winding 15, and mandrel 33 is then heated so as to heat-cure (or heat-harden) the varnish (see Fig. 7).

In the heat-curing process, the mandrel 33 thermally expands, and the diameter thereof also expands; thus, the outer-peripheral side of the mandrel 33 contacts the inner-peripheral side of the stator winding 15, and the mandrel 33 pushes the stator winding 15 to the stator winding iron core 17 side.

Accordingly, the inner and outer-peripheral shapes of the stator winding 15 are arranged, and the stator winding 15 is fixed to the inner-peripheral side of the stator winding iron core 17 via varnish and the silicone sheet.

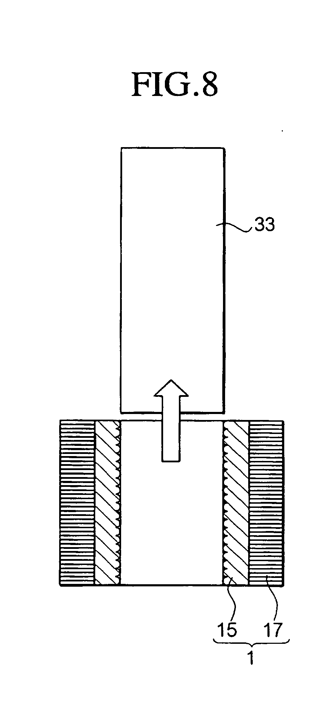

After the varnish is cured, the mandrel 33 is pulled out, thereby providing the slot-less stator 1 comprising stator winding iron core 17 and stator winding 15 (see Fig. 8).

As explained above, in the present method of impregnating a coil with a resin, the procedure for impregnating the stator winding 15 with varnish (so as to incorporate BN particles 18) and heat-curing the varnish is divided into the first process of incorporating BN particles 18 into the stator winding 15, and the second process of soaking the stator winding (obtained in the first process) in varnish and heat-curing the varnish. Therefore, it is possible to prevent the problem that the flowability or fluidity of the varnish is reduced and the inside of the stator winding 15 is not fully impregnated. Such a problem occurs in a conventional method of impregnating the stator winding with varnish in which BN particles are included in advance.

Additionally, during the impregnation using varnish in the above embodiment, the BN particles 18 in the vicinity of the surface of the stator winding 15 disperse in the varnish; thus, the stator winding is impregnated with varnish including BN particles 18, thereby improving the heat conductivity of the varnish.

Also in the above embodiment, by merely soaking the cylindrically-formed stator winding 15 in alcohol solution 16 and then drying the winding, cylindrical stator winding 15 in which BN particles 18 are embedded is obtained. Therefore, the procedure is simpler in comparison with the method disclosed in Japanese Unexamined Patent Application, First Publication, Hei 9-215282, which includes a complicated step of sprinkling BN particles while winding a coil wire. Therefore, the productivity can also be improved according to the present embodiment.

Furthermore, in the present embodiment, the lubricating oil is made to flow through the inner-peripheral side of the stator winding 15, thereby improving the cooling ability.

Accordingly, even if the rotating electric machine 3 according to the present embodiment is applied to a high-speed rotating electric machine having the rotor (7) rotating at a high speed such as 100,000 rpm inside the stator winding (15), the heat due to heat loss can be effectively removed. Therefore, it is possible to realize a high-speed rotating electric machine which can be connected to a larger load and which can output higher power.

In the above embodiment, the stator winding 15 is soaked in varnish impregnation vessel 31 so as to impregnate the stator winding with varnish. However, in another example, the surface of the stator winding 15 may be coated with varnish, or varnish may be injected from an end face of the stator winding 15.

Also in the above embodiment, cylindrical stator winding 15 is formed by combining the coil segments 23a, 23b, and 23c having a rhomboid-like shape. However, another method may be employed for forming the cylindrical stator winding 15.

A method of manufacturing a rotating electric machine having a stator winding, and a method of impregnating a coil with a resin are disclosed, by which the coil can be easily and reliably impregnated with heat-conductive particles. The method comprises the steps of soaking a coil (15) in a volatile solution (16) which includes heat-conductive particles (18); pulling the coil out of the solution and drying the coil; and impregnating the dried coil with a thermosetting resin and heat-curing the resin.

## Claims

1. A method of impregnating a coil with a resin, comprising the steps of:
inserting a coil (15) into an iron core (17);
impregnating the coil (15) with a thermosetting resin;
inserting a mandrel (33) made of thermically expanding material into the impregnated coil (15);
heat-curing the resin while the coil (15) is pushed onto the core (17) by thermically expanding the mandrel (33), and
pulling out the mandrel (33) out of the coil (15),
**characterized by**, before the step of inserting the coil (15) into the iron core (17) is carried out, soaking the coil (15) into a volatile solution (16) which includes boron nitride particles (18) or Al₂O₃ particles; and pulling the coil (15) out of the solution and drying the coil (15).

2. A method of impregnating a coil with resin as claimed in claim 1, **characterized in that** the volatile solution (16) is an alcohol solution.

3. A method of impregnating a coil with resin as claimed in claim 1, **characterized in that** in the step of impregnating the dried coil (15) with a thermosetting resin, the coil (15) is coated with the resin.

4. A method of impregnating a coil with resin as claimed in claim 1, **characterized in that** in the step of impregnating the dried coil (15) with a thermosetting resin, the coil (15) is soaked in a liquid resin.

5. A method of impregnating a coil with resin as claimed in claim 1, **characterized in that** the step of drying the coil (15) is provided by natural air drying.

6. A method of impregnating a coil with resin as claimed in claim 1, **characterized in that** the coil (15) is part of a stator winding in a rotating electric machine.

## Patentansprüche

1. Verfahren zum Imprägnieren einer Wicklung mit Harz, welches die Schritte umfasst:
Einsetzen einer Wicklung (15) in einen Eisenkern (17);
Imprägnieren der Wicklung (15) mit wärmehärtendem Harz;
Einsetzen eines aus thermisch ausdehnendem Material hergestellten Doms (33) in die imprägnierte Wicklung (15);
Wärmehärten des Harzes, während durch den sich thermisch ausdehnenden Dorn (33) die Wicklung (15) auf den Kern (17) gedrückt wird, und
Herausziehen des Doms (33) aus der Wicklung (15),
**gekennzeichnet durch**, bevor der Schritt des Einsetzens der Wicklung (15) in den Eisenkern (17) ausgeführt wird, Eintauchen der Wicklung (15) in eine flüchtige Lösung (16), die Bornitridpartikel (18) oder Al₂O₃-Partikel enthält; und
Herausziehen der Wicklung (15) aus der Lösung und Trocknen der Wicklung (15).

2. Verfahren zum Imprägnieren einer Wicklung mit Harz nach Anspruch 1, **dadurch gekennzeichnet, dass** die flüchtige Lösung (16) eine alkoholische Lösung ist.

3. Verfahren zum Imprägnieren einer Wicklung mit Harz nach Anspruch 1, **dadurch gekennzeichnet, dass** in dem Schritt des Imprägnierens der getrockneten Wicklung (15) mit wärmehärtendem Harz die Wicklung (15) mit dem Harz beschichtet wird.

4. Verfahren zum Imprägnieren einer Wicklung mit Harz nach Anspruch 1, **dadurch gekennzeichnet, dass** in dem Schritt des Imprägnierens der getrockneten Wicklung (15) mit wärmehärtendem Harz die Wicklung (15) in ein flüssiges Harz eingetaucht wird.

5. Verfahren zum Imprägnieren einer Wicklung mit Harz nach Anspruch 1, **dadurch gekennzeichnet, dass** der Schritt des Trocknens der Wicklung (15) durch natürliche Lufttrocknung erfolgt.

6. Verfahren zum Imprägnieren einer Wicklung mit Harz nach Anspruch 1, **dadurch gekennzeichnet, dass** die Wicklung (15) Teil einer Statorwicklung in einer rotierenden elektrischen Maschine ist.

## Revendications

1. Procédé d'imprégnation d'une bobine avec une résine, comprenant les étapes consistant à :
insérer une bobine (15) dans un noyau de fer (17) ;
imprégner la bobine (15) avec une résine thermodurcissable ;
insérer un mandrin (33) fabriqué dans un matériau à expansion thermique dans la bobine imprégnée (15) ;
durcir à la chaleur la résine tandis que la bobine (15) est poussée sur le noyau (17) par expansion thermique du mandrin (33), et
tirer le mandrin (33) hors de la bobine (15),
**caractérisé par**, avant que l'étape d'insertion de la bobine (15) dans le noyau de fer (17) ne soit effectuée, l'étape consistant à tremper la bobine (15) dans une solution volatile (16) qui inclut des particules de nitrure de bore (18) ou des particules Al₂O₃ ; et l'étape consistant à tirer la bobine (15) à l'extérieur de la solution et sécher la bobine (15).

2. Procédé d'imprégnation d'une bobine avec une résine, tel que défini dans la revendication 1, **caractérisé en ce que** la solution volatile (16) est une solution d'alcool.

3. Procédé d'imprégnation d'une bobine avec une résine, tel que défini dans la revendication 1, **caractérisé en ce que** dans l'étape d'imprégnation de la bobine séchée (15) avec une résine thermodurcissable, la bobine (15) est enrobée avec la résine.

4. Procédé d'imprégnation d'une bobine avec une résine, tel que défini dans la revendication 1, **caractérisé en ce que** dans l'étape d'imprégnation de la bobine séchée (15) avec une résine thermodurcissable, la bobine (15) est trempée dans une résine liquide.

5. Procédé d'imprégnation d'une bobine avec une résine, tel que défini dans la revendication 1, **caractérisé en ce que** l'étape de séchage de la bobine (15) est effectuée par séchage à l'air naturel.

6. Procédé d'imprégnation d'une bobine avec une résine, tel que défini dans la revendication 1, **caractérisé en ce que** la bobine (15) fait partie d'un enroulement statorique dans une machine électrique rotative.
